# EUROPEAN PATENT APPLICATION

(11) **EP 4 664 623 A1**
(43) Date of publication of application: **17.12.2025**
(21) Application number: 23921457.0
(22) Date of filing: 19.09.2023
(51) Int. Cl.: H01M 50/166, H01M 50/169, H01M 50/171, H01M 10/052

(54) **SECONDARY BATTERY**

(30) Priority: 06.02.2023 KR 20230015421
(71) Applicant: SAMSUNG SDI CO., LTD., Yongin-si, Gyeonggi-do 17084 (KR)
(72) Inventor: KIM, Dae Kyu, Yongin-si, Gyeonggi-do 17084 (KR)
(74) Representative: Marks & Clerk LLP
(86) International application number: PCT/KR2023/014188
(87) International publication number: WO 2024/167083

(57) **Abstract**

An embodiment of the present invention relates to a secondary battery and addresses the technical problem of providing a secondary battery which can prevent deformation during the assembly of a cap assembly. To this end, disclosed in the present invention is a secondary battery comprising: a can; an electrode assembly accommodated in the can; a cap assembly for closing the can and including a cap-up and a safety vent; and a fixing means for fixing the cap-up and the safety vent to each other.

## Description

### TECHNICAL FIELD

Embodiments of the present disclosure relate to a secondary battery.

### BACKGROUND ART

Generally, a cylindrical secondary battery includes an electrode assembly, a can configured to receive the electrode assembly and an electrolyte, and a cap assembly coupled to an upper end of the can to seal the can and to allow current generated by the electrode assembly to flow to an external device. The cap assembly may include a cap-up, a safety vent, and a cap-down, and if unintended deformation occurs during a process of assembling these components, airtightness of the secondary battery decreases and the overall height of the secondary battery also changes, whereby it is desirable to provide technology capable of preventing such deformation.

The above information disclosed in this Background Art section is only for enhancement of understanding of the background of the present disclosure and therefore it may contain information that does not form the prior art.

### DETAILED DESCRIPTION OF THE INVENTION

### TECHNICAL PROBLEM

Embodiments of the present disclosure provide a secondary battery capable of preventing deformation during assembly of a cap assembly.

### TECHNICAL SOLUTION

A secondary battery according to embodiments of the present disclosure includes a can, an electrode assembly received in the can, a cap assembly configured to close the can, the cap assembly including a cap-up and a safety vent, and a fixing means configured to fix the cap-up and the safety vent to each other.

The cap-up may include a cap-up contact portion in contact with the safety vent, a cap-up slope portion inclined upward from the cap-up contact portion, and a cap-up ceiling portion extending from the cap-up slope portion, and the fixing means may be disposed at the cap-up contact portion so as to be adjacent to the cap-up slope portion.

The cap-up may include a cap-up contact portion in contact with the safety vent, a cap-up slope portion inclined upward from the cap-up contact portion, and a cap-up ceiling portion extending from the cap-up slope portion, and the fixing means may be disposed within a 1/3 region adjacent to the cap-up slope portion with respect to the entire radial range of the cap-up contact portion.

The cap-up may include a cap-up contact portion in contact with the safety vent, a cap-up slope portion inclined upward from the cap-up contact portion, and a cap-up ceiling portion extending from the cap-up slope portion, and the fixing means may be disposed at an inner edge of the cap-up contact portion.

The fixing means may be configured as a recess and a protrusion formed so as to correspond to each other at the cap-up and the safety vent, respectively.

The protrusion may be formed vertically.

The protrusion may be formed so as to be inclined outward in a radial direction toward an end thereof.

The recess and the protrusion may be provided in plural pairs.

The fixing means may be provided as a heat fusion sheet disposed between the cap-up and the safety vent.

The heat fusion sheet may be provided in plural.

The fixing means may be provided as a weld portion formed at the cap-up and the safety vent by welding.

The weld portion may be formed at a lower surface of the safety vent.

The weld portion may be provided in plural.

The weld portion may be provided in a dot shape.

The weld portion may be provided in a line shape.

### EFFECTS OF THE INVENTION

Embodiments of the present disclosure provide a secondary battery configured such that a cap-up and a safety vent are fixed to each other via a fixing means, whereby it is possible to prevent the phenomenon in which the cap-up is pushed inward farther than the safety vent, whereby the cap-up and the safety vent are vertically spaced apart from each other, due to the stress applied to the cap-up during bending of the safety vent such that an edge of the safety vent surrounds an edge of the cap-up in order to assemble a cap assembly.

### BRIEF DESCRIPTION OF DRAWINGS

FIG. 1 is a sectional view showing a secondary battery according to various embodiments of the present disclosure.
FIG. 2A is a sectional view showing a cap assembly in a secondary battery according to an embodiment of the present disclosure.
FIG. 2B is an enlarged view showing part A in FIG. 2A.
FIG. 2C is a view showing the part corresponding to FIG. 2B as an example different from FIG. 2B.
FIG. 3 is a sectional view showing a cap assembly in a secondary battery according to another embodiment of the present disclosure.
FIG. 4 is a sectional view showing a cap assembly in a secondary battery according to a further embodiment of the present disclosure.

### MODE FOR IMPLEMENTATION OF THE INVENTION

Hereinafter, preferred embodiments of the present disclosure will be described in detail with reference to the accompanying drawings.

The embodiments of the present disclosure are provided to more fully illustrate the present disclosure to a person having ordinary skill in the art to which the present disclosure pertains, the embodiments may be modified in various other forms, and the scope of the present disclosure is not limited to the embodiments. The embodiments are provided to make the disclosure more faithful and complete and to completely convey the idea of the present disclosure fully to those skilled in the art.

Also, in the following drawings, the thickness or size of each layer is exaggerated for convenience and clarity of description and the same reference symbols in the drawings refer to the same elements. As used herein, the term "and/or" includes any one of the enumerated items and any combination of one or more thereof. In addition, as used herein, the term "connected" refers not only to direct connection between members A and B but also to indirect connection between members A and B with member C interposed between members A and B.

The terms used in the specification are intended to describe specific embodiments and are not intended to limit the present disclosure. As used herein, singular forms may include plural forms, unless the context clearly indicates otherwise. In addition, as used herein, the terms "include" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath", "below", "lower", "above", and "upper", may be utilized to facilitate understanding of one element or feature shown in the drawings as different from another element or feature. The terms related to space are intended to facilitate understanding of the present disclosure in various states of process or use and are not intended to limit the present disclosure. For example, if an element or feature in a FIG. is inverted, an element or feature described as "beneath" or "below" becomes "above" or "upper". Thus, "beneath" is a concept that encompasses "above" or "below".

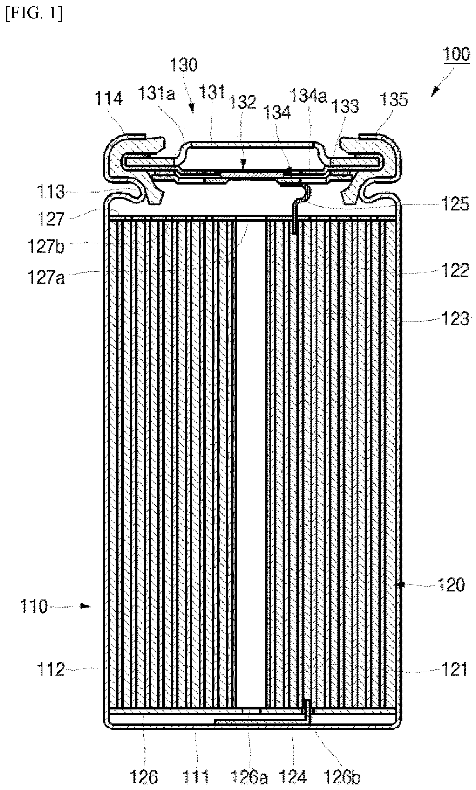

FIG. 1 is a sectional view showing a secondary battery 100 according to various embodiments of the present disclosure.

Referring to FIG. 1, the secondary battery 100 according to the present disclosure includes a can 110, an electrode assembly 120, and a cap assembly 130.

The can 110 may include a circular bottom portion 111 and a cylindrical side portion 112 extending upward from the bottom portion 111 by a certain length. The top of the can 110 may be open during a process of assembling the secondary battery. During the process of assembling the secondary battery 100, therefore, the electrode assembly 120 may be inserted into the can 110 together with an electrolyte. The can 110 may include steel, a steel alloy, aluminum, an aluminum alloy, or an equivalent thereto. The can 110 may include a beading portion 113 depressed inwardly in the part thereof located under the cap assembly 130 to prevent the electrode assembly 120 and the cap assembly 130 from being ejected outward, and may include a crimping portion 114 bent inwardly in the part thereof located above the cap assembly.

The electrode assembly 120 may be received in the can 110. The electrode assembly 120 may include a negative electrode plate 121 coated with a negative electrode active material (e.g., graphite or carbon), a positive electrode plate 122 coated with a positive electrode active material (e.g., a transition metal oxide (LiCoO₂, LiNiO₂, or LiMn₂O₄), and a separator 123 interposed between the negative electrode plate 121 and the positive electrode plate 122 to prevent short circuit and to allow only the migration of lithium ions. The negative electrode plate 121, the positive electrode plate 122, and the separator 123 may be wound into a so-called jelly-roll shape. The negative electrode plate 121 may include a copper (Cu) or nickel (Ni) foil, the positive electrode plate 122 may include an aluminum (Al) foil, and the separator 123 may include polyethylene (PE) or polypropylene (PP). A negative electrode tab 124 protruding and extending downward by a certain length may be welded to the negative electrode plate 121, and a positive electrode tab 125 protruding upward by a certain length may be welded to the positive electrode plate 122. The opposite configuration is also possible. The negative electrode tab 124 may include copper or nickel, and the positive electrode tab 125 may include aluminum. The negative electrode tab 124 may be welded to the bottom portion 111 of the can 110. Therefore, the can 110 may serve as a negative electrode. The positive electrode tab 125 may be welded to the bottom portion 111 of the can 110. In this case, the can 110 may serve as a positive electrode.

A first insulating plate 126 having a first hole 126a formed in the center thereof and a second hole 126b formed in an outer side thereof may be interposed between the electrode assembly 120 and the bottom portion 111 of the can 110. The first insulating plate 126 may prevent electrical contact between the electrode assembly 120 and the bottom portion 111. The first insulating plate 126 may prevent electrical contact between the positive electrode plate 122 of the electrode assembly 120 and the bottom portion 111. If a large amount of gas is generated due to abnormality of the secondary battery, the first hole 126a may allow the gas to quickly move upward through the winding center of the electrode assembly 120, and the second hole 126b may allow the negative electrode tab 124 to extend therethrough and be welded to the bottom portion 111.

Similarly, a second insulating plate 127 having a first hole 127a formed in the center thereof and a plurality of second holes 127b formed in an outer side thereof may be interposed between the electrode assembly 120 and the cap assembly 130. The second insulating plate 127 may prevent electrical contact between the electrode assembly 120 and the cap assembly 130. The second insulating plate 127 may prevent electrical contact between the negative electrode plate 121 of the electrode assembly 120 and the cap assembly 130. If a large amount of gas is generated due to abnormality of the secondary battery, the first hole 127a may allow the gas to quickly move to the cap assembly 130 therethrough, and one of the second holes 127b may allow the positive electrode tab 125 to extend therethrough and be welded to the cap assembly 130. The remaining second holes 127b may allow an electrolyte to quickly permeate the electrode assembly 120 therethrough during an electrolyte injection process.

The cap assembly 130 may include a cap-up 131 having a plurality of through-holes 131a, a safety vent 132 disposed under the cap-up 131, a connecting ring 133 disposed under the safety vent 132, and a cap-down 134 disposed under the safety vent 132 and the connecting ring 133, having a plurality of through-holes 134a, and electrically connected to the positive electrode tab 125. The cap assembly 130 may further include an insulating gasket 135 configured to insulate the cap-up 131, the safety vent 132, and the cap-down 134 from the side portion 112 of the cylindrical case 110. The insulating gasket 135 may be pressed between the beading portion 113 and the crimping portion 114 formed on the side portion 112 of the can 110.

If a large amount of gas is generated due to abnormality of the secondary battery, the through-hole 131a of the cap-up 131 and the through-hole 134a of the cap-down 134 may allow the internal gas to be discharged to the outside therethrough. The internal gas may reverse the safety vent 132 upward through the through-hole 134a of the cap-down 134, the safety vent 132 may be electrically disconnected from the cap-down 134, and the safety vent 132 may be torn, allowing the internal gas to be released to the outside through the through-hole 131a of the cap-up 131.

An electrolyte (not shown) may be injected into the can 110, which may allow lithium ions generated by electrochemical reaction at the negative electrode plate 121 and the positive electrode plate 122 in the battery to move during charging and discharging. The electrolyte may include a non-aqueous organic electrolyte, which is a mixture of a lithium salt and a high-purity organic solvent, or may include a polymer using polyelectrolyte or a solid electrolyte.

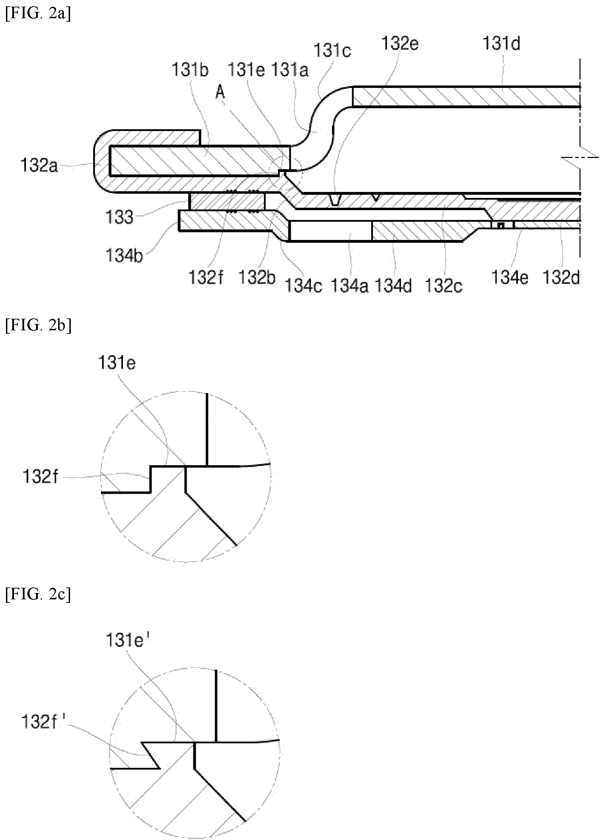

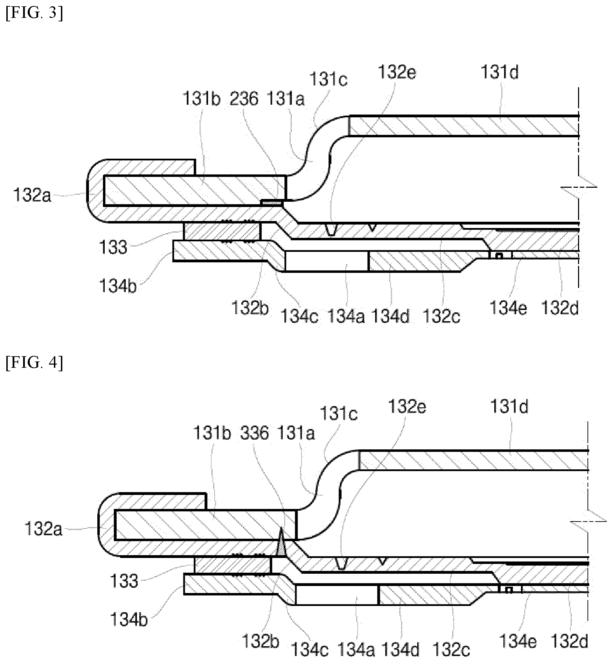

The secondary battery 100 according to the present disclosure includes a fixing means provided between the cap-up 131 and the safety vent 132. The fixing means may be configured in the form of a recess 131e and a protrusion 132f (see FIGs. 2A to 2C), may be configured in the form of a heat fusion sheet 236 (see FIG. 3), or may be configured in the form of a weld portion 336 (see FIG. 4), each of which will be described in detail below.

FIG. 2A is a sectional view showing a cap assembly 130 in a secondary battery according to an embodiment of the present disclosure.

Referring to FIG. 2A, the cap assembly 130 may include a cap-up 131, a safety vent 132 disposed under the cap-up 131, a connecting ring 133 disposed under the safety vent 132, and a cap-down 134 disposed under the safety vent 132 and the connecting ring 133.

The cap-up 131 may include a cap-up contact portion 131b in contact with the safety vent 132, a cap-up slope portion 131c inclined upward from the cap-up contact portion 131b and having a plurality of through-holes 131a, and a cap-up ceiling portion 131d extending from the cap-up slope portion 131c. An external device may be electrically connected to the cap-up ceiling portion 131d.

The safety vent 132 may include a vent contact portion 132a in contact with the cap-up contact portion 131b of the cap-up 131, a vent slope portion 132b inclined downward from the vent contact portion 132a, a vent bottom portion 132c extending from the vent slope portion 132b, and a vent protruding portion 132d protruding downward from the vent bottom portion 132c and disposed in contact with the cap-down 134. The vent protruding portion 132d is welded to the cap-down 134 by laser welding or ultrasonic welding such that the vent protruding portion 132d and the cap-down 134 can be electrically connected to each other.

The vent contact portion 132a may be bent plural times so as to be in contact with a lower surface, a side surface, and an upper surface of the cap-up contact portion 131b. For example, the vent contact portion 132a may be formed so as to have a larger radius than the cap-up contact portion 131b, the vent contact portion 132a may be disposed so as to be in contact with the lower surface of the cap-up contact portion 131b, the part of the vent contact portion 132a extending beyond the edge of the cap-up contact portion 131b may be bent upward so as to surround the side surface of the cap-up contact portion 131b, and the part may be bent inward so as to be in contact with the upper surface of the cap-up contact portion 131b, whereby assembly may be achieved. At this time, the stress applied to the cap-up contact portion 131b during bending of the vent contact portion 132a as described above may cause the phenomenon in which the cap-up contact portion 131b is pushed inward farther than the vent contact portion 132a, whereby the lower surface of the cap-up contact portion 131b and the vent contact portion 132a are vertically spaced apart from each other.

In order to prevent this phenomenon, in the secondary battery 100 according to the embodiment of the present disclosure, a fixing means in the form of a recess 131e and a protrusion 132f is provided between the cap-up 131 and the safety vent 132. For example, the recess 131e is formed in the lower surface of the cap-up contact portion 131b, and the protrusion 132f, which is configured to engage with the recess 131e, is formed on the vent contact portion 132a. A recess may be formed in the vent contact portion 132a, and a protrusion configured to engage with the recess may be formed on the lower surface of the cap-up contact portion 131b. As the result of engagement between the recess 131e and the protrusion 132f, therefore, it is possible to prevent the phenomenon in which the cap-up contact portion 131b is pushed inward farther than the vent contact portion 132a, whereby the lower surface of the cap-up contact portion 131b and the vent contact portion 132a are vertically spaced apart from each other.

In some examples, as shown in FIG. 2B, the protrusion 132f may be formed vertically. In this case, the recess 131e may also be formed vertically so as to correspond to the protrusion 132f.

In another example, as shown in FIG. 2C, a protrusion 132f' may be formed so as to be inclined outward in a radial direction toward an end thereof. In this case, a recess 131e' may also be formed in an inclined state so as to correspond to the protrusion 132f'. This reverse slope structure may more effectively prevent the phenomenon in which the lower surface of the cap-up contact portion 131b and the vent contact portion 132a are vertically spaced apart from each other.

Although the recess 131e and the protrusion 132f are illustrated as being formed in a pair in the figure, the recess 131e and the protrusion 132f may be provided in plural pairs so as to be disposed spaced apart from each other by a specific distance in the radial direction.

The fixing means is preferably disposed at the cap-up contact portion 131b so as to be adjacent to the cap-up slope portion 131c. For example, the fixing means is preferably disposed within the 1/3 region adjacent to the cap-up slope portion 131c with respect to the entire radial range of the cap-up contact portion 131b. Table 1 below shows measurement data on the degree to which the lower surface of the cap-up contact portion 131b and the vent contact portion 132a are vertically spaced apart from each other depending on the position of the fixing means. The entire radius of the cap-up contact portion 131b was 3.0 mm, and tests were conducted while the fixing means was moved 0.5 mm at a time from the innermost edge of the cap-up contact portion 131b.

**[Table 1]**

| Test | Position of fixing means (distance from inner edge of the cap-up contact portion (mm)) | Deformation | Degree of deformation (mm) |
|---|---|---|---|
| #1 | 0 | X | 0 |
| #2 | 0.5 | X | 0 |
| #3 | 1 | X | 0 |
| #4 | 1.5 | O | 0.05 |
| #5 | 2.0 | O | 0.10 |
| #6 | 2.5 | O | 0.15 |
| #7 | 3.0 | O | 0.20 |

It can be seen from the test results that, if the fixing means deviates from the 1/3 region adjacent to the cap-up slope portion 131c with respect to the entire radius range of the cap-up contact portion 131b, the phenomenon in which the lower surface of the cap-up contact portion 131b and the vent contact part 132a are vertically spaced apart from each other occurs. From the perspective of preventing the phenomenon in which the lower surface of the cap-up contact portion 131b and the vent contact portion 132a are vertically spaced apart from each other, it is preferable for the fixing means to be disposed at the innermost edge of the cap-up contact portion 131b (test #1).

Referring back to FIG. 2A, in the cap assembly 130, the vent bottom portion 132c of the safety vent 132 may further include a vent recess 131e. If the internal pressure of the secondary battery exceeds a predetermined pressure, the vent recess 131e may rupture, thereby allowing internal gas to be released to the outside.

The cap-down 134 may include a cap-down contact portion 134b in contact with the connecting ring 133, a cap-down slope portion 134c inclined downward from the cap-down contact portion 134b, and a cap-down bottom portion 134d extending from the cap-down slope portion 134c. The connecting ring 133 may be interposed between the vent contact portion 132a and the cap-down contact portion 134b. Each of the cap-up 131, the safety vent 132, and the cap-down 134 may include a metal (e.g., copper, nickel, or aluminum), and the connecting ring 133 may include an insulating material (e.g., polypropylene or polyethylene).

FIG. 3 is a sectional view showing a cap assembly in a secondary battery according to another embodiment of the present disclosure.

In the embodiment previously described with reference to FIGs. 1 and 2A to 2C, the fixing means is configured in the form of the recess 131e and the protrusion 132f, but in the other embodiment shown in FIG. 3, the fixing means is configured in the form of a heat fusion sheet 236. The other embodiment is substantially identical to the embodiment except that the recess 131e and the protrusion 132f are omitted and the heat fusion sheet 236 is added. Therefore, a redundant description of the same configurations will be omitted, and the same reference symbols are used in the figure.

The heat fusion sheet 236 is disposed between the cap-up contact portion 131b and the vent contact portion 132a, and fixes the same to each other by heat fusion. Therefore, it is possible to prevent the phenomenon in which the cap-up contact portion 131b is pushed inward farther than the vent contact portion 132a, whereby the lower surface of the cap-up contact portion 131b and the vent contact portion 132a are vertically spaced apart from each other, due to the stress applied to the cap-up contact portion 131b during bending of the cap-up contact portion 131b as described above.

In the figure, the heat fusion sheet 236 is illustrated as being provided in one, but the heat fusion sheet 236 may be provided in plural so as to be arranged spaced apart from each other by a specific distance in the radial direction.

The heat fusion sheet 236 is preferably disposed at the cap-up contact portion 131b so as to be adjacent to the cap-up slope portion 131c, and it is preferable for the heat fusion sheet to be disposed within the 1/3 region adjacent to the cap-up slope portion 131c with respect to the entire radial range of the cap-up contact portion 131b. The effects of this configuration have been described with reference to Table 1. From the perspective of preventing the phenomenon in which the lower surface of the cap-up contact portion 131b and the vent contact portion 132a are vertically spaced apart from each other, it is preferable for the heat fusion sheet 236 to be disposed at the innermost edge of the cap-up contact portion 131b.

A recess configured to allow the heat fusion sheet 236 to be located therein may be formed in at least one of the cap-up contact portion 131b and the vent contact portion 132a.

FIG. 4 is a sectional view showing a cap assembly in a secondary battery according to a further embodiment of the present disclosure.

In the embodiment previously described with reference to FIGs. 1 and 2A to 2C, the fixing means is configured in the form of the recess 131e and the protrusion 132f, but in the further embodiment shown in FIG. 4, the fixing means is configured in the form of a weld portion 336. The further embodiment is substantially identical to the embodiment except that the recess 131e and the protrusion 132f are omitted and the weld portion 336 is added. Therefore, a redundant description of the same configurations will be omitted, and the same reference symbols are used in the figure.

The weld portion 336 is configured to fix the cap-up contact portion 131b and the vent contact portion 132a, and is formed by performing welding in the state in which the cap-up contact portion 131b and the vent contact portion 132a overlap each other. Welding includes laser welding, resistance welding, and ultrasonic welding, and it is preferable to perform welding on the lower surface of the vent contact portion 132a although welding on the upper surface of the cap-up contact portion 131b is not excluded. If the cap-up contact portion 131b and the vent contact portion 132a are fixed by the weld portion 336, it is possible to prevent the phenomenon in which the cap-up contact portion 131b is pushed inward farther than the vent contact portion 132a, whereby the lower surface of the cap-up contact portion 131b and the vent contact portion 132a are vertically spaced apart from each other, due to the stress applied to the cap-up contact portion 131b during bending of the cap-up contact portion 131b as described above.

In the figure, the weld portion 336 is illustrated as a single dot, but the weld portion 336 may be provided in plural so as to be arranged spaced apart from each other by a specific distance in the radial direction, arranged linearly in the radial direction, or arranged linearly in a circumferential direction.

The weld portion 336 is preferably disposed at the cap-up contact portion 131b so as to be adjacent to the cap-up slope portion 131c, and it is preferable for the weld portion to be disposed within the 1/3 region adjacent to the cap-up slope portion 131c with respect to the entire radial range of the cap-up contact portion 131b. The effects of this configuration have been described with reference to Table 1. From the perspective of preventing the phenomenon in which the lower surface of the cap-up contact portion 131b and the vent contact portion 132a are vertically spaced apart from each other, it is preferable for the weld portion 336 to be disposed at the innermost edge of the cap-up contact portion 131b.

The above is only an embodiment for implementing the secondary battery according to the present disclosure, the present disclosure is not limited to the above embodiment, and a person having ordinary skill in the art to which the present disclosure pertains will recognize the technical spirit of the present disclosure to the extent that various modifications can be made without departing from the gist of the present disclosure as claimed in the following claims.

## Claims

1. A secondary battery comprising:
a can;
an electrode assembly received in the can;
a cap assembly configured to close the can, the cap assembly comprising a cap-up and a safety vent; and
a fixing means configured to fix the cap-up and the safety vent to each other.

2. The secondary battery as claimed in claim 1, wherein
the cap-up comprises a cap-up contact portion in contact with the safety vent, a cap-up slope portion inclined upward from the cap-up contact portion, and a cap-up ceiling portion extending from the cap-up slope portion, and
the fixing means is disposed at the cap-up contact portion so as to be adjacent to the cap-up slope portion.

3. The secondary battery as claimed in claim 1, wherein
the cap-up comprises a cap-up contact portion in contact with the safety vent, a cap-up slope portion inclined upward from the cap-up contact portion, and a cap-up ceiling portion extending from the cap-up slope portion, and
the fixing means is disposed within a 1/3 region adjacent to the cap-up slope portion with respect to an entire radial range of the cap-up contact portion.

4. The secondary battery as claimed in claim 1, wherein
the cap-up comprises a cap-up contact portion in contact with the safety vent, a cap-up slope portion inclined upward from the cap-up contact portion, and a cap-up ceiling portion extending from the cap-up slope portion, and
the fixing means is disposed at an inner edge of the cap-up contact portion.

5. The secondary battery as claimed in claim 1, wherein the fixing means is configured as a recess and a protrusion formed so as to correspond to each other at the cap-up and the safety vent, respectively.

6. The secondary battery as claimed in claim 5, wherein the protrusion is formed vertically.

7. The secondary battery as claimed in claim 5, wherein the protrusion is formed so as to be inclined outward in a radial direction toward an end thereof.

8. The secondary battery as claimed in claim 5, wherein the recess and the protrusion are provided in plural pairs.

9. The secondary battery as claimed in claim 1, wherein the fixing means is provided as a heat fusion sheet disposed between the cap-up and the safety vent.

10. The secondary battery as claimed in claim 9, wherein the heat fusion sheet is provided in plural.

11. The secondary battery as claimed in claim 1, wherein the fixing means is provided as a weld portion formed at the cap-up and the safety vent by welding.

12. The secondary battery as claimed in claim 11, wherein the weld portion is formed at a lower surface of the safety vent.

13. The secondary battery as claimed in claim 11, wherein the weld portion is provided in plural.

14. The secondary battery as claimed in claim 11, wherein the weld portion is provided in a dot shape.

15. The secondary battery as claimed in claim 11, wherein the weld portion is provided in a line shape.
